# EUROPÄISCHE PATENTSCHRIFT

(11) **EP 0 928 415 B1**
(45) Veröffentlichungstag und Bekanntmachung des Hinweises auf die Patenterteilung: **29.10.2003**
(21) Anmeldenummer: 97909190.7
(22) Anmeldetag: 24.09.1997
(51) Int. Cl.: G01N 13/04, G01N 7/10

(54) **MEMBRANOSMOMETER**
MEMBRANE OSMOMETER
Osmomètre à membrane

(30) Priorität: 28.09.1996 DE 19640063
(43) Veröffentlichungstag der Anmeldung: 14.07.1999
(73) Patentinhaber: Forschungszentrum Jülich GmbH, 52425 Jülich (DE)
(72) Erfinder: BÖLING, Gerd, D-52459 Inden (DE)
(86) Internationale Anmeldenummer: DE9702179
(87) Internationale Veröffentlichungsnummer: WO98013682

(56) Entgegenhaltungen:
- EP-A- 0 183 072
- DE-A- 4 407 637
- US-A- 3 866 460
- US-A- 4 664 808

## Beschreibung

Die Erfindung bezieht auf eine Meßeinrichtung gemäß Oberbegriff des Anspruchs 1. Eine solche Meßeinrichtung ist aus WO 95/24629 bekannt.

Die bekannte Meßvorrichtung besteht aus drei Teilbereichen, nämlich einer Zelle (im folgenden Durchflußzelle genannt), einer Zelle (im folgenden Mittelzelle genannt) und einer Zelle (im folgenden Meßzelle genannt). Die Durchflußzelle weist eine Zu- und eine Ableitung auf. Mittels eines Druckaufnehmers kann der in Meßzelle herrschende Druck gemessen werden. Eine semipermeable Trennwand (im folgenden Vorreinigungsmembran genannt) trennt die Durchflußzelle von der Mittelzelle. Eine weitere semipermeable Trennwand a (im folgenden Meßmembran genannt) trennt die Mittelzelle von der Meßzelle.

Die Meßmembran ist für weniger Komponenten aus einem flüssigen Substanzgemisch durchlässig als die Vorreinigungsmembran.

Beispielsweise sei Bier das flüssige Substanzgemisch. Mit der bekannten osmotischen Meßeinrichtung soll der Alkoholgehalt im Bier bestimmt. Dann ist die Vorreinigungsmembran so gewählt, daß diese Alkohol und Wasser, nicht aber die im Bier gelösten Stoffe hindurchläßt.

Die Meßmembran läßt Wasser, nicht aber Alkohol passieren.

Zunächst wird über die Zu- und Ableitung Wasser (allgemein: Spülflüssigkeit) durch die Durchflußzelle hindurchgeleitet. Ein Teil des Wassers gelangt dann aus der Durchflußzelle über die Vorreinigungsmembran in die Mittelzelle hinein. Die Meßzelle enthält eine wäßrige Salzlösung. Um einen Konzentrationsausgleich herbeizuführen, wandern Wassermoleküle aus der Mittelzelle in Meßzelle hinein. In der Meßzelle stellt sich ein stationärer osmotischer Druck p₀ ein, der im folgenden Arbeitsdruck genannt wird. Der sogenannte Ausgangszustand ist damit erreicht.

Zur Durchführung der eigentlichen Messung wird nun durch die Durchflußzelle Bier gespült. Die in Bier gelösten Stoffe durchdringen nicht die Vorreinigungsmembran, jedoch das im Bier enthaltene Wasser-Alkohol-Gemisch. Auf diese Weise gelangt neben Wasser auch Alkohol in die Mittelzelle.

Im Vergleich zum Ausgangszustand hat die Wasserkonzentration in der Mittelzelle nun abgenommen. Als Reaktion auf diese Konzentrationsabnahme treten Wassermoleküle aus der Meßzelle heraus und gelangen in die Mittelzelle. In der Meßzelle wird folglich ein Druckabfall bewirkt. Dieser mittels des Druckaufnehmers gemessene Druckabfall stellt ein Maß für den Alkoholgehalt im Bier dar.

Zur Durchführung einer weiteren Messung muß zunächst der Ausgangszustand wieder hergestellt werden. Zu diesem Zweck wird die Durchflußzelle erneut mit Wasser durchspült. Der in der Mittelzelle befindliche Alkohol wandert daraufhin in die Durchflußzelle zurück. Der osmotische Druck in der Meßzelle steigt folglich wieder bis Erreichen des Arbeitsdruckes an. Eine weitere Messung kann nun durchgeführt werden.

Nachteilhaft sind beim bekannten Stand der Technik lange Meßzeiten erforderlich, da Meßwerte nur einzeln aufgenommen werden können. Ist ein einzelner Meßwert ermittelt, so muß vor Aufnahme eines neuen Meßwertes der Ausgangszustand wieder hergestellt werden. Kontinuierliches Messen ist nicht möglich.

Des weiteren verfügen die bekannten Trennwände regelmäßig nicht über die Eigenschaft, einerseits Flüssigkeiten wie Wasser und Alkohol durchzulassen und andererseits die darin gelösten Stoffe vollständig (d. h. zu 100 %) zurückzuhalten. Nachteilhaft gelangen daher beim Stand der Technik gelöste Stoffe aus der Durchflußzelle in kleinen Mengen durch die Vorreinigungsmembran in die Mittelzelle hinein. Meßergebnisse werden so verfälscht. Aufgabe der Erfindung ist die Bereitstellung einer Meßeinrichtung der eingangs genannten Art, mittels der kontinuierliches Messen möglich ist und mit der in einer weiteren Ausgestaltung genauere Meßergebnisse als bisher erzielt werden können.

Die Aufgabe wird gelöst, indem bei einer Meßeinrichtung der eingangs genannten Art die Mittelzelle mit einer Ableitung versehen wird.

Die beanspruchte Meßeinrichtung wird wie folgt betrieben. Im Ausgangszustand befinde sich in der Meßzelle eine Spülflüssigkeit mit einem in der Spülflüssigkeit gelöstem Stoff. Die Meßmembran sei für die Spülflüssigkeit durchlässig, nicht aber für den in der Meßzelle befindlichen gelösten Stoff.

Die Durchflußzelle werde mit der Spülflüssigkeit durchspült. Die zwischen Durchflußzelle und Mittelzelle befindliche Vorreinigungsmembran sei für die Spülflüssigkeit durchlässig. Infolgedessen gelangt kontinuierlich Spülflüssigkeit aus der Durchflußzelle in die Mittelzelle. Die in die Mittelzelle gelangte Spülflüssigkeit entweicht kontinuierlich über die Ableitung der Mittelzelle. In der Meßzelle stellt sich ein osmotischer Druck, nämlich der Arbeitsdruck ein. Dieser wird mit dem Meßaufnehmer gemessen.

Hat sich der Arbeitsdruck eingestellt, so wird eir flüssiges Substanzgemisch durch die Durchflußzelle gespült. Das flüssige Substanzgemisch bestehe aus der Spülflüssigkeit und weiteren Komponenten. Die zwischen Durchflußzelle und Mittelzelle befindliche Vorreinigungsmembran sei für zumindest eine Komponente des flüssigen Substanzgemisches undurchlässig und für zumindest eine andere Komponente des flüssigen Substanzgemisches -neben der Spülflüssigkeit - durchlässig. Die andere Komponente oder Komponenten, die die Vorreinigungsmembran passieren können, werden im folgenden Analyt genannt. Die zwischen Meßzelle und Mittelzelle befindliche Meßmembran sei undurchlässig für den Analyten.

Kontinuierlich treten daher nun aus der Durchflußzelle die Spülflüssigkeit und der Analyt in die Mittelzelle ein. Als Reaktion auf die damit einhergehende Konzentrationsabnahme der Spülflüssigkeit in der Mittelzelle verringert sich der in der Meßzelle herrschende osmotische Druck. Dieser Druckabfall in der Meßzelle ist Maß für die Konzentration des Analyten im flüssigen Substanzgemisch.

Beispielsweise sei die Spülflüssigkeit Wasser, der Analyt sei im Bier befindlicher Alkohol und die übrigen Komponenten des flüssigen Substanzgemisches seien sonstige gelöste Stoffe im Bier.

Der Druckabfall in der Meßzelle verhält sich linear zum Alkoholgehalt des Bieres, welches durch die Durchflußzelle gespült wird. Verändert sich der Alkoholgehalt in der Durchflußzelle, so gelangt Wasser mit verändertem Alkoholgehalt in die Mittelzelle. In der Meßzelle entsteht infolgedessen eine Druckveränderung. Diese Druckveränderung ist Maß für die Veränderung des Alkoholgehaltes des Bieres, welches durch die Durchflußzelle gespült wurde.

Dieses Beispiel veranschaulicht, inwiefern kontinuierliches Messen im Unterschied zum bekannten Stand der Technik mit der beanspruchten Meßeinrichtung möglich ist.

In einer vorteilhaften Ausgestaltung der Erfindung wird anstelle einer konventionellen Membran zwischen Durchflußzelle und und Mittelzelle eine Umkehrosmosemembran als Vorreinigungsmembran eingesetzt. Insbesondere bei dieser Ausgestaltung sind vorteilhaft Mittel zur Erzeugung eines Überdruckes in der Durchflußzelle vorgesehen. Überdrücke von z. B. 25 bar sollen damit erzeugt werden können. Derartig hohe Drücke bewirken, daß zwar Flüssigkeiten die Umkehrosmosemembran passieren können. Gelöste Stoffe werden durch die Umkehrosmosemembran vollständig, also zu 100% zurückgehalten.

Im Vergleich zum vorgenannten Stand der Technik gelingt mittels einer als Vorreinigungsmembran eingesetzten Umkehrosmosemembran eine erheblich bessere Abtrennung des Analyten und der Spülflüssigkeit von übrigen gelösten Stoffen eines Substanzgemisches. Meßergebnisse werden dann nicht durch die übrigen gelösten Stoffe verfälscht, die aufgrund einer unbefriedigenden Wirkung einer konventionellen Membran unerwünscht in die Mittelzelle gelangen.

In einer weiteren Ausgestaltung der Erfindung wird ist die Durchflußzelle derart ausgestaltet, daß das flüssige Substanzgemisch parallel zur Oberfläche der Vorreinigungsmembran an der Vorreinigungsmembran vorbeigeführt wird. Hierdurch wird bewirkt, daß sich auf der Vorreinigungsmembran ansammelnde Keime weggespült werden. Des weiteren kann die Vorreinigungsmembran dann nicht durch zurückgehaltene Stoffe aus dem Substanzgemisch zugesetzt werden, da diese ebenfalls weggespült werden. Diese Ausgestaltung der Erfindung ermöglicht daher vorteilhaft lange Standzeiten.

Vorteilhaft wird aus vergleichbaren Gründen alternativ oder zusätzlich die Spülflüssigkeit parallel zur Oberfläche der Meßmembran an derselben vorbeigeführt.

Der vorgenannte Aufbau weist den wesentlichen Vorteil auf, daß nur noch kurze Meßzeiten und praktisch keine Regenerationszeiten mehr erforderlich sind. Eine Regeneration, also Spülen mit einer Spülflüssigkeit, ist nur erforderlich, wenn absolut gemessen werden soll. Sollen lediglich relative Konzentrationsveränderungen ermittelt werden, so kann kontinuierlich gemessen werden.

Die vorliegende Meßeinrichtung zur Messung von osmotisch wirksamen Substanzen (z. B. Ethanol) in komplexen Substanzgemischen (z. B. wäßrige Lösung) beruht auf der Nutzung und Kombination des Osmose- und Umkehrosmoseprinzips, wobei jeweils Osmose und Umkehrosmosemembranen in zwei von einander unabhängigen Trennschritten zur Anwendung kommen.

Hierbei wird z. B. die zu messende alkoholische Lösung im ersten Trennschritt zunächst einer Vortrennung bzw. Vorreinigung durch eine Umkehrosmosemembran unterzogen, bei der selektiv, der Meßanforderung entsprechend, störende Substanzen wie z. B. Salze oder verschiedene Zukker quantitativ entfernt werden. Der Alkohol permeiert diese Vorreinigungsmembran als wäßrige Lösung. Der Alkoholgehalt wird anschließend unmittelbar mittels der nach dem Osmoseprinzip arbeitenden Meßmembran nebst zugehöriger Meßzelle gemessen.

Durch Kombination des Prinzips der Umkehrosmose mit dem Verfahren der "Cross-Flow Filtration" sind hierbei kontinuierlich durchzuführende Messungen von Alkoholgehalten (allgemein: Analytgehalten) in einem Flüssigkeitsstrom möglich. Außerdem ermöglicht diese Anordnung relativ hohe Standzeiten der Meßzelle bzw. der darin eingesetzten Membranen, da der ständig fließende Querströme (d. h. Flüssigkeiten strömen parallel und dabei entlang von Membranoberflächen) einer Verkeimung und mikrobiellen Zersetzung entgegenwirken. Nicht zuletzt aber ermöglicht eine derartige Meßanordnung auch die Messung koloider Substanzgemische mit darin dispers gelösten Anteilen.

Zusammengefaßt weist die Meßeinrichtung folgende Vorteile auf:
- vollständige Vortrennung bzw. Vorreinigung des zu untersuchenden Substanzgemisches durch eine analytsowie spülflüssigkeitspermeablen Membran unter Ausnutzung der hohen Trenn- und Filtrationsleistungen des Umkehrosmose-Prinzips bei Einsatz von Umkehrosmosemembranen.
- Möglichkeit der kontinuierlichen Messung des Gehaltes von Analyten in Substanzgemischen durch Anwendung des Cross-Flow-Prinzips.
- Möglichkeit der schnellen Messung des Gehaltes von Analyten aus Substanzgemischen durch Messung im Durchflußverfahren (kurze Meßzeiten, eine Regenerationsphase der Meßzelle ist nicht mehr erforderlich).

Die Erfindung wird anhand des folgenden Beispieles näher erläutert.

Die Durchflußzelle ist durch eine analytsowie spülflüssigkeitspermeable Membran (ROM) von der Mittelzelle getrennt. Die Mittelzelle ist durch eine analytimpermeable, aber spülflüssigkeitspermeable Membran (OM) von der Meßzelle getrennt. Als analytpermeable Membran ist insbesondere die aus "Die Angewandte Makromolekulare Chemie 73 (1978) 1-23" bekannte asymmetrische Umkehrosmose-Membran geeignet, wenn der Alkoholgehalt in Bier bestimmt werden soll.

Die vorgeschaltete RO-Membran als semipermeable Umkehrosmosemembran arbeitet nach dem Filtrationsprinzip. Diese trennt z. B. einen in wäßriger Lösung vorliegenden Analyten von weiteren im Substanzgemisch vorhandenen Stoffen. Der Analyt und das Wasser treten ohne die übrigen Stoffe in die Mittelzelle ein.

Die nachgeschaltete Osmosemembran schließt als analytimpermeable Membran eine mit einer wäßrigen Salzlösung gefüllte Meßzelle ein ("osmotische Zelle"). Ein herkömmlicher Druckaufnehmer vermag den Druck in der Meßzelle zu messen.

Das zu analysierende Substanzgemisch wird je nach Zusammensetzung mit einem Druck von ca. 25-30 bar im Durchflußverfahren kontinuierlich in die Durchflußzelle entlang einer Umkehr- bzw. Reverse-Osmose-Membran (ROM) geleitet.

Aufgrund der RO-Membran wird das Substanzgemisch einer Vortrennung bzw. Vorreinigung unterzogen. Der Analyt (z. B. Alkohol) und die Spülflüssigkeit (z. B. Wasser) passieren die Vorreinigungsmembran und treten in die Mittelzelle ein.

Unmittelbar an die RO-Membran schließt sich in der Mittelzelle eine drucklos arbeitende Osmose-Membran an, die eine definierte und nicht in Größe und Volumen veränderbare, mit einer Salzlösung gefüllte Meßzelle abschließt. Als Salz wurde z. B. Kaliumhexacyanoferat zur Messung des Alkoholgehaltes von Bier eingesetzt. Wird das System mit H₂O_{dest} gespült, baut sich nach dem Prinzip der Osmose aufgrund des Konzentrationsgefälles zwischen Innenlösung in der Meßzelle und Außenlösung in der Mittelzelle entsprechend der Salzkonzentration in der Meßzelle durch Wasserfluß in die Meßzelle ein "Arbeitsdruck" auf, der mit Steigerung der jeweiligen Salzkonzentration proportional zunimmt und der über den Druckaufnehmer gemessen wird.

Wird in die Durchflußzelle ein Substanzgemisch geleitet, so wird es durch die vorgeschaltete RO-Membran (ROM) vorgereinigt. Hiernach verursacht die zu bestimmende osmotisch wirksame Analytlösung (z. B. wäßrige alkoholische Lösung) bei Kontakt mit der nachgeschalteten Osmosemembran (OM) entsprechend dem Prinzip der Osmose einen Fluß aus der Meßzelle in die Mittelzelle, wobei die durch die Membran permeierende Spülflüssigkeit durch den permanenten Fluß (Durchfluß des Analyten durch) abtransportiert wird.

Der somit verursachte Druckabfall in der Meßzelle steht dabei in linearem Zusammenhang zur Analytkonzentration und kann nach Erstellung von Eichgeraden zur direkten Bestimmung der Konzentration eines Analyten aus einem komplexen Substanzgemisch herangezogen werden.

Analog zur beschriebenen Durchführung einer AlkohoLmessung ist das Meßverfahren durch Kombination entsprechender semipermeabler Membranen und Osmotikumsalze in der Meßzelle auch auf andere Analyte anwendbar (z. B. Messung von Glucose aus komplexen Substanzgemischen heraus).
Die Membranen werden parallel zur Oberfläche angespült, so daß lange Standzeiten möglich sind.

## Patentansprüche

1. Meßeinrichtung mit einer Durchflußzelle, die einen Zu- und einen Abfluß aufweist, mit einer Mittelzelle, die durch eine semipermeable Vorreinigungsmembran von der Durchflußzelle getrennt ist, mit einer Meßzelle, die durch eine semipermeable Meßmembran von der Mittelzelle getrennt ist, mit einem Druckaufnehmer zur Messung des Drukkes in der Meßzelle,
**dadurch gekennzeichnet, daß** die Mittelzelle eine Ableitung aufweist.

2. Meßeinrichtung nach vorhergehendem Anspruch,
**dadurch gekennzeichnet, daß** als Vorreinigungsmembran eine Umkehrosmosemembran vorgesehen ist.

## Claims

1. Measuring device with a flow cell having an inflow and an outflow, with a middle cell separated from the flow cell by a semipermeable precleaning membrane, with a measuring cell separated from the middle cell by a semipermeable measuring membrane, with a pressure sensor for measuring the pressure in the measuring cell, **characterised in that** the middle cell has an outlet.

2. Measuring device according to the preceding claim, **characterised in that** a reverse osmosis membrane is provided as the precleaning membrane.

## Revendications

1. Dispositif de mesure doté d'une cellule de débit présentant un afflux et un écoulement, avec une cellule médiane séparée de la cellule de débit par une membrane semi-perméable de pré-épuration, avec une cellule de mesure séparée de la cellule médiane par une membrane de mesure semi-perméable avec un capteur de pression mesurant la pression dans la cellule de mesure,
**caractérisé en ce que**
la cellule médiane comporte une dérivation.

2. Dispositif de mesure selon la revendication précédente,
**caractérisé en ce que**
une membrane osmotique réversible est prévue comme membrane de pré-épuration.
